# EUROPEAN PATENT APPLICATION

(11) **EP 4 756 366 A1**
(43) Date of publication of application: **10.06.2026**
(21) Application number: 23948994.1
(22) Date of filing: 17.10.2023
(51) Int. Cl.: G01B 11/24, G01B 11/245

(54) **DEVICE AND METHOD FOR MEASURING CYLINDRICITY OF CYLINDRICAL BATTERY CELL**

(30) Priority: 14.08.2023 CN 202311013631
(71) Applicant: Contemporary Amperex Technology Co., Limited, Ningde, Fujian 352100 (CN)
(72) Inventor: WU, Kai, Ningde, Fujian 352100 (CN); TU, Yinhang, Ningde, Fujian 352100 (CN); ZHU, Jinping, Ningde, Fujian 352100 (CN)
(74) Representative: Gong, Jinping
(86) International application number: PCT/CN2023/125023
(87) International publication number: WO 2025/035572

(57) **Abstract**

A cylindricity detection apparatus and detection method for a cylindrical battery cell. A cylindricity detection apparatus (100) for a cylindrical battery cell (200) includes a bracket (101); a stage (102) mounted on the bracket (101), where the stage (102) is configured to hold a cylindrical battery cell (200); and a plurality of image capture devices (103) mounted on the bracket (101), respectively, where the plurality of image capture devices (103) are configured to acquire image information of the cylindrical battery cell (200), so as to construct a cylindrical surface based on the image information, and acquire a cylindricity of the cylindrical battery cell (200) based on the constructed cylindrical surface.

## Description

### RELATED APPLICATIONS

This application claims priority to Chinese Patent Application No. 202311013631.2, filed on August 14, 2023 and entitled "CYLINDRICITY DETECTION APPARATUS AND DETECTION METHOD FOR CYLINDRICAL BATTERY CELL," the entire content of which is incorporated herein by reference.

### TECHNICAL FIELD

This application relates to the technical field of lithium battery dimension detection, and more particularly, to a cylindricity detection apparatus and detection method for a cylindrical battery cell.

### BACKGROUND

In the current field of lithium batteries, dimensional control of batteries is becoming increasingly stringent. Due to the complexity of imaging cylindrical surfaces of cylindrical battery cells, monitoring cylindricity dimensions of battery cells is relatively challenging. At present, the field of cylindrical surface dimension detection for cylindrical battery cells mainly focuses on controlling diameters of cylindrical battery cells, with no clear solutions for cylindricity detection. However, cylindricity is an important dimension to monitor for cylindrical battery cells, as it directly reflects the shape and condition of the cylindrical surface of the battery cell. Therefore, its control is essential.

In view of this, it is necessary to provide a new cylindricity detection apparatus and detection method for a cylindrical battery cell to address or at least mitigate the aforementioned technical shortcomings.

### SUMMARY

In view of the above problems, this application provides a cylindricity detection apparatus and detection method for a cylindrical battery cell, aiming to address the technical problem in the related art of difficulty in detecting the cylindricity of a cylindrical battery cell.

According to a first aspect, this application provides a cylindricity detection apparatus for a cylindrical battery cell, including:
a bracket;
a stage, where the stage is mounted on the bracket, and the stage is configured to hold a cylindrical battery cell; and
a plurality of image capture devices, where the plurality of image capture devices are mounted on the bracket; and the plurality of image capture devices are configured to acquire image information of the cylindrical battery cell, so as to construct a cylindrical surface based on the image information, and acquire the cylindricity of the cylindrical battery cell based on the constructed cylindrical surface.

By providing the stage configured to hold the cylindrical battery cell and employing the plurality of image capture devices to scan from various directions around the side surface of the cylindrical battery cell, image information from all directions of the side surface can be obtained. The cylindrical surface is constructed based on the image information, and the cylindricity of the cylindrical battery cell is acquired based on the constructed cylindrical surface. This embodiment has the advantage of directly detecting the cylindricity of the cylindrical battery cell with accurate measurement results.

In some embodiments, the plurality of image capture devices are uniformly distributed along an outer periphery of the cylindrical battery cell.

By uniformly distributing the plurality of image capture devices along the outer periphery of the cylindrical battery cell, the entire outer periphery of the cylindrical battery cell can be covered, and the number of image capture devices can be reduced, thereby lowering manufacturing costs.

In some embodiments, the plurality of image capture devices are spaced apart along a central axis direction of the cylindrical battery cell.

By spacing the image capture devices along the central axis direction of the cylindrical battery cell, mutual interference of lasers emitted by laser scanners of the image capture devices can be reduced, ensuring good imaging effects to obtain clear images and facilitating subsequent processing of the acquired images. Moreover, this can allow for complete coverage of the field of view of the peripheral cylindrical surface of the cylindrical battery cell with the minimum number of image capture devices, ensuring detection accuracy while reducing the number of image capture devices, thereby lowering the manufacturing cost and computational complexity of the cylindricity detection apparatus for a cylindrical battery cell.

In some embodiments, the plurality of image capture devices are configured to take a photograph of the cylindrical battery cell to acquire image information, so as to acquire a peripheral 3D image of the cylindrical battery cell based on the image information, select a first preset number of detection planes at preset positions on the peripheral 3D image, select a second preset number of detection points on each detection plane, and acquire the cylindricity of the cylindrical battery cell based on a difference in radiuses of cylindrical surfaces constructed from the detection points on the detection planes.

By taking a photograph of the cylindrical battery cell with the plurality of image capture devices to acquire the image information, obtaining the peripheral 3D image of the cylindrical battery cell based on the image information, and acquiring the cylindricity of the cylindrical battery cell through preset programs of the image capture devices, the cylindricity of the cylindrical battery cell can be directly obtained with high detection precision.

In some embodiments, the image capture devices include three 3D line-scan cameras mounted on the bracket, the three 3D line-scan cameras are uniformly distributed along an outer periphery of the cylindrical battery cell, and the three 3D line-scan cameras are spaced apart along a central axis direction of the cylindrical battery cell.

By arranging the three 3D line-scan cameras spaced along the outer periphery of the cylindrical battery cell, images of the entire side surface of the cylindrical battery cell can be acquired and detection accuracy can be improved, reducing the number of image capture devices, thereby lowering the manufacturing cost and computational complexity of the cylindricity detection apparatus for a cylindrical battery cell. By spacing the image capture devices along the central axis direction of the cylindrical battery cell, mutual interference of lasers emitted by laser scanners of the image capture devices can be reduced, ensuring good imaging effects to obtain images of the cylindrical battery cell in the entire height direction of the side surface, thereby facilitating subsequent processing of the acquired images.

In some embodiments, the bracket includes a mounting column and three upright columns, the stage is mounted on the mounting column, the three upright columns are arranged around an outer periphery of the stage, and the three 3D line-scan cameras are mounted on the three upright columns in a one-to-one correspondence.

The mounting column is disposed to provide a mounting position for the stage, the three upright columns are disposed around the outer periphery of the stage, and each upright column is disposed with one 3D line-scan camera mounted thereon so that the three 3D line-scan cameras are spaced around the outer periphery of the cylindrical battery cell during detection. This can enable acquisition of images of the entire side surface of the cylindrical battery cell, reducing the likelihood of blind spots that cannot be captured.

In some embodiments, the cylindricity detection apparatus for a cylindrical battery cell further includes a calibration block, where the calibration block is configured to calibrate an image capture system composed of the plurality of image capture devices, and the calibration block includes a base plate and two polyhedral prisms, where the bottom surfaces of the two polyhedral prisms are connected to two opposite sides of the base plate, respectively.

By calibrating the coordinate systems of the plurality of image capture devices using the polyhedral prisms and stitching the coordinate systems of the plurality of image capture devices together, calibration of the image capture system composed of the plurality of image capture devices is achieved, improving the accuracy of image stitching and detection precision.

In some embodiments, the polyhedral prism is a trapezoidal prism, a bottom surface of the trapezoidal prism is connected to the base plate, the trapezoidal prism includes four inclined side surfaces, and the inclined side surfaces of one trapezoidal prism are arranged in a one-to-one correspondence and parallel to the inclined side surface of the other trapezoidal prism.

By adopting the trapezoidal prisms, manufacturing is convenient, and the coordinate system's torsion angle can be calibrated using eight pairwise parallel inclined side surfaces, improving calibration accuracy and, consequently, improving the subsequent detection precision of the image capture devices.

In some embodiments, the bracket is provided with a lifting module, the lifting module is connected to the bracket, and the stage is rotatably mounted on the lifting module and capable of moving up and down with the lifting module.

By rotatably mounting the stage on the lifting module, the cylindrical battery cell can be rotated to the detection station by rotating the stage, and then the lifting module can be controlled to ascend. In the ascending process of the lifting module, an encoder sends a photographing signal to the plurality of image capture devices, and image scanning is performed at the same time, facilitating image acquisition of the cylindrical battery cell.

According to some embodiments of this application, this application provides a detection method for detecting a cylindricity of a cylindrical battery cell, including the following steps:
controlling a plurality of image capture devices to take a photograph of a cylindrical battery cell to acquire image information of a periphery of the cylindrical battery cell;
acquiring a peripheral 3D image of the cylindrical battery cell based on the image information; and
acquiring a cylindricity of the cylindrical battery cell based on the peripheral 3D image.

By using the plurality of image capture devices to simultaneously acquire the image information of the side surface of the cylindrical battery cell and processing the acquired image information through a plug-in in an industrial computer to obtain the cylindricity of the cylindrical battery cell, this fills the gap in the related art where the cylindricity of cylindrical battery cells could not be measured, requires low installation precision for stages and cylindrical battery cells, and offers high detection efficiency.

In some embodiments, before the step of controlling a plurality of image capture devices to take a photograph of a cylindrical battery cell to acquire image information of a periphery of the cylindrical battery cell, the method further includes the steps:
controlling the plurality of image capture devices to acquire a 3D image of a calibration block;
acquiring dimensional information of the calibration block based on the 3D image; and
calibrating coordinates and a torsion angle of an image capture system composed of the plurality of image capture devices based on the acquired dimensional information and standard dimensions of the calibration block.

The calibration block is used to calibrate the coordinate systems of the plurality of image capture devices and the coordinate systems of the plurality of image capture devices are stitched together. This implements calibration of the coordinate system of the image capture system composed of the plurality of image capture devices, improving the accuracy of image stitching and detection precision.

In some embodiments, the step of acquiring a cylindricity of the cylindrical battery cell based on the peripheral 3D image includes:
selecting a first preset number of detection planes on the peripheral 3D image along a central axis direction of the peripheral 3D image;
selecting a second preset number of detection points on each detection plane;
constructing a minimum cylindrical surface and a maximum cylindrical surface of the peripheral 3D image based on the detection points; and
acquiring the cylindricity of the cylindrical battery cell based on a difference between a radius of the minimum cylindrical surface and a radius of the maximum cylindrical surface.

By selecting the first preset number of detection planes on the peripheral 3D image, selecting the second preset number of detection points on each detection plane, constructing the minimum cylindrical surface and the maximum cylindrical surface of the cylindrical battery cell based on the detection points, and acquiring the cylindricity of the cylindrical battery cell based on the difference between the radius of the minimum cylindrical surface and the radius of the maximum cylindrical surface, the cylindricity of the cylindrical battery cell can be conveniently obtained with high detection precision.

In some embodiments, the step of selecting a first preset number of detection planes on the peripheral 3D image along a central axis direction of the peripheral 3D image includes:
selecting three detection planes on the peripheral 3D image along the central axis direction of the peripheral 3D image, where the three detection planes are located at preset positions of the peripheral 3D image, respectively.

By arranging the three detection planes at the preset positions of the peripheral 3D image, positions of detection planes can be selected based on actual needs, enabling targeted detection of key detection positions of the cylindrical battery cell.

In some embodiments, the step of selecting a first preset number of detection planes on the peripheral 3D image along a central axis direction of the peripheral 3D image includes:
selecting three detection planes on the peripheral 3D image along the central axis direction of the peripheral 3D image, where the three detection planes are located at a top position, a middle position, and a bottom position of the peripheral 3D image, respectively.

The first detection plane is located at the top position of the peripheral 3D image, the second detection plane is located at the middle position of the peripheral 3D image, and the third detection plane is located at the bottom position of the peripheral 3D image, enabling the selected detection planes to cover the cylindrical surface as much as possible.

In some embodiments, the step of selecting a second preset number of detection points on each detection plane includes:
selecting at least ten detection points on each detection plane.

By selecting the at least ten detection points on each detection plane, the surface condition of the cylindrical surface can be more comprehensively reflected, improving detection precision.

In some embodiments, the step of selecting a second preset number of detection points on each detection plane includes:
selecting twelve uniformly distributed detection points on each detection plane.

When the number of selected detection points is twelve, both high detection precision and high detection efficiency can be ensured.

The above description is only an overview of the technical solutions of this application. To provide a clearer understanding of the technical means of this application, the content of the description can be implemented, and to make the above and other objectives, features, and advantages of this application more apparent and understandable, specific embodiments of this application are exemplified below.

### BRIEF DESCRIPTION OF DRAWINGS

By reading the detailed description of the preferred embodiments below, various other advantages and benefits will become clear to those skilled in the art. The drawings are provided solely for the purpose of illustrating the preferred embodiments and are not considered to limit this application. Throughout the drawings, identical components are denoted by identical reference signs. In the drawings:
FIG. 1 is a schematic structural diagram of a cylindricity detection apparatus for a cylindrical battery cell according to some embodiments of this application;
FIG. 2 is a schematic diagram of a relative positional structure of image capture devices on a same horizontal plane according to some embodiments of this application;
FIG. 3 is a schematic diagram of a relative positional structure of image capture devices in a vertical direction according to some embodiments of this application;
FIG. 4 is a side view of a calibration block according to some embodiments of this application;
FIG. 5 is a top view of a calibration block according to some embodiments of this application;
FIG. 6 is a schematic flowchart of a detection method according to a first embodiment of this application;
FIG. 7 is a schematic flowchart of a detection method according to a second embodiment of this application;
FIG. 8 is a schematic flowchart of a detection method according to a third embodiment of this application;
FIG. 9 is a schematic flowchart of a detection method according to a fourth embodiment of this application;
FIG. 10 is a schematic flowchart of a detection method according to a fifth embodiment of this application;
FIG. 11 is a schematic flowchart of a detection method according to a sixth embodiment of this application;
FIG. 12 is a schematic flowchart of a detection method according to a seventh embodiment of this application; and
FIG. 13 is a schematic diagram of a composited peripheral 3D image of a cylindrical battery cell and detection planes and detection points selected on the peripheral 3D image according to some embodiments of this application.

Reference signs in the detailed description are as follows:
cylindricity detection apparatus for cylindrical battery cell 100; bracket 101, mounting column 1011; upright column 1012; connecting plate 1013; stage 102, image capture device 103, lifting module 104; 1031. laser scanner
cylindrical battery cell 200; calibration block 300; base plate 301; polyhedral prism 302; trapezoidal prism 303; inclined side surface 3031; first side surface 3031a; second side surface 3031b; top surface 3032; bottom surface 3033; peripheral 3D image 400; first detection plane 401; second detection plane 402; third detection plane 403; and detection point 404.

### DETAILED DESCRIPTION

The embodiments of the technical solutions of this application will be described in detail below with reference to the drawings. The following embodiments are only used to illustrate the technical solutions of this application more clearly and are merely exemplary, not intended to limit the scope of protection of this application.

Unless otherwise defined, all technical and scientific terms used herein have the same meanings as commonly understood by those skilled in the technical field of this application; the terms used herein are only for the purpose of describing specific embodiments and are not intended to limit this application; the terms "include" and "have" and any variations thereof in the description, claims, and the above description of the drawings of this application are intended to cover non-exclusive inclusion.

In the description of the embodiments of this application, technical terms such as "first" and "second" are used only to distinguish different objects and should not be understood as indicating or implying relative importance or implying the number, specific order, or primary-secondary relationship of the indicated technical features. In the description of the embodiments of this application, "a plurality" means two or more, unless otherwise explicitly and specifically limited.

Reference to "embodiment" herein means that a particular feature, structure, or characteristic described in connection with the embodiment may be included in at least one embodiment of this application. The appearance of this phrase in various places in the specification does not necessarily refer to the same embodiment, nor is it a separate or alternative embodiment mutually exclusive with other embodiments. Those skilled in the art explicitly and implicitly understand that the embodiments described herein can be combined with other embodiments.

In the description of the embodiments of this application, the term "and/or" merely describes an association relationship of associated objects, indicating that three relationships may exist, for example, A and/or B may indicate: A exists alone, A and B exist simultaneously, and B exists alone. Additionally, the character "/" herein generally indicates an "or" relationship between the associated objects.

In the description of the embodiments of this application, the term "a plurality" refers to two or more (including two), similarly, "multiple groups" refers to two or more groups (including two groups), and "multiple pieces" refers to two or more pieces (including two pieces).

In the description of the embodiments of this application, technical terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," and "circumferential" indicate orientations or positional relationships based on the orientations or positional relationships shown in the drawings, and are only for the convenience of describing the embodiments of this application and simplifying the description, rather than indicating or implying that the referred device or element must have a specific orientation, be constructed and operated in a specific orientation, and therefore should not be understood as limiting the embodiments of this application.

In the description of the embodiments of this application, unless otherwise explicitly specified and limited, technical terms such as "mount," "connect," "connection," and "fix" should be understood broadly, for example, they may refer to a fixed connection, a detachable connection, or an integral connection; they may refer to a mechanical connection or an electrical connection; they may refer to a direct connection or an indirect connection through an intermediary, or an internal communication or interaction relationship between two elements. Those skilled in the art can understand the specific meanings of the above terms in the embodiments of this application based on specific circumstances.

Currently, from the perspective of market development, the application of power batteries is becoming increasingly widespread. Power batteries are not only used in energy storage systems such as hydroelectric, thermal, wind, and solar power stations, but also widely applied in electric vehicles such as electric bicycles, electric motorcycles, and electric cars, as well as in military equipment and aerospace fields. With the continuous expansion of the application fields of power batteries, their market demand is also continuously increasing.

In the field of lithium batteries, dimensional control of battery cells is becoming increasingly stringent. Due to the complexity of imaging cylindrical surfaces of cylindrical battery cells, monitoring cylindricity dimensions of cylindrical battery cells is relatively difficult, resulting in a lack of effective detection methods for cylindricity of cylindrical battery cells. However, cylindricity is a critical parameter that best reflects the shape of the cylindrical surface of a cylindrical battery cell. In the related art, only profilometers can be used to measure the diameter of cylindrical battery cells from multiple angles to indirectly achieve the purpose of monitoring cylindricity of battery cells. However, this measurement approach is not a direct measurement of cylindricity and cannot accurately measure the cylindricity of cylindrical battery cells.

The battery cell disclosed in the embodiments of this application can be used in electric devices that use batteries as a power source or in various energy storage systems that use batteries as energy storage elements. Electric devices may include, but are not limited to, mobile phones, tablets, laptops, electric toys, electric tools, electric bicycles, electric vehicles, ships, spacecraft, and the like. Electric toys may include fixed or mobile electric toys, such as gaming consoles, electric car toys, electric ship toys, and electric airplane toys, while spacecraft may include airplanes, rockets, space shuttles, and spaceships.

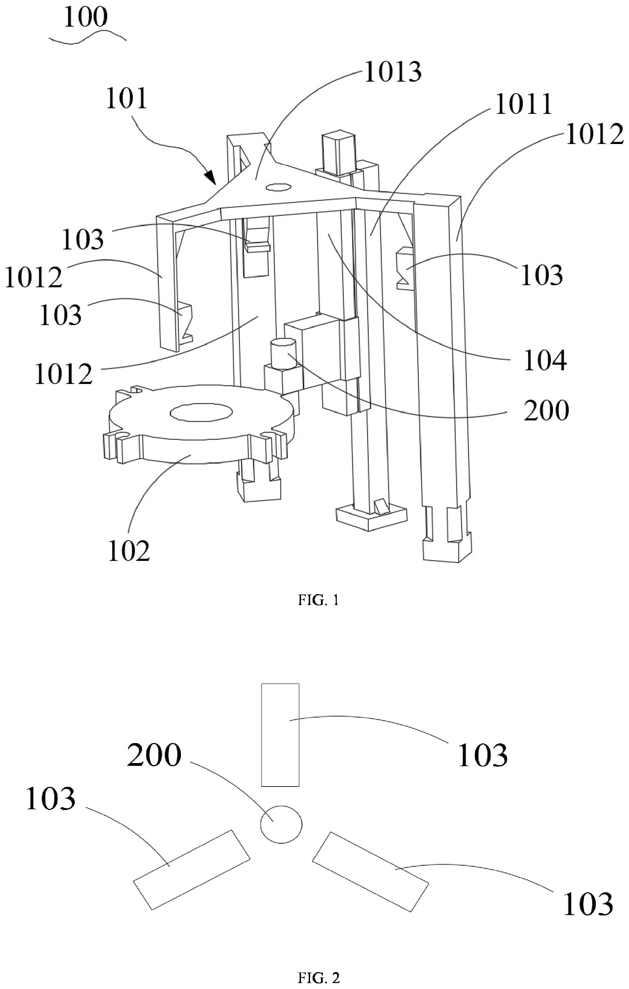

Referring to FIG. 1, according to some embodiments of this application, this application provides a cylindricity detection apparatus 100 for a cylindrical battery cell, which includes a bracket 101, a stage 102 mounted on the bracket 101, and a plurality of image capture devices 103 mounted on the bracket 101, respectively. The stage 102 is configured to hold a cylindrical battery cell. The plurality of image capture devices 103 are configured to acquire image information of the cylindrical battery cell, so as to construct a cylindrical surface based on the image information, and acquire a cylindricity of the cylindrical battery cell 200 based on the constructed cylindrical surface. The stage 102 is configured to hold the cylindrical battery cell 200, the bracket 101 is provided with the plurality of image capture devices 103, and the plurality of image capture devices 103 are arranged around a side surface of the cylindrical battery cell 200 to take a photograph (or scan) of the cylindrical battery cell 200 from various directions of the side surface of the cylindrical battery cell 200, so as to acquire image information of the side surface of the cylindrical battery cell 200. The cylindricity detection apparatus 100 for a cylindrical battery cell may further include an industrial computer. The acquired image information of the side surface is processed through a plug-in of the industrial computer to construct multiple virtual cylindrical surfaces, and the cylindricity of the cylindrical battery cell 200 can be obtained based on the constructed multiple virtual cylindrical surfaces.

It should also be noted that the embodiments of this application employ a plurality of image capture devices 103 to scan from various directions around the side surface of the cylindrical battery cell 200, enabling simultaneous acquisition of image information from all directions of the side surface. If a single image capture device 103 is used and the cylindrical battery cell 200 is rotated to obtain image information from various directions of the side surface, relative angular rotation between the stage 102 and the cylindrical battery cell 200 during rotation may introduce detection errors, require higher installation precision for the stage 102 and the cylindrical battery cell 200, and result in longer photographing time and lower detection efficiency.

By providing a stage configured to hold the cylindrical battery cell 200 and employing a plurality of image capture devices 103 to scan from various directions around the side surface of the cylindrical battery cell 200, image information from all directions of the side surface can be obtained simultaneously, a cylindrical surface can be constructed based on the image information, and the cylindricity of the cylindrical battery cell 200 can be acquired based on the constructed cylindrical surface. This embodiment has the advantage of directly detecting the cylindricity of the cylindrical battery cell 200 with accurate measurement results.

Referring to FIG. 1, in some embodiments, the plurality of image capture devices 103 are uniformly distributed along an outer periphery of the cylindrical battery cell 200.

By uniformly distributing the plurality of image capture devices 103 along the outer periphery of the cylindrical battery cell 200, the image capture range of the plurality of image capture devices 103 covers the entire outer periphery of the cylindrical battery cell 200, ensuring that no part of the image information of the periphery of the cylindrical battery cell 200 is missed, and the number of image capture devices 103 can be reduced.

By uniformly distributing the plurality of image capture devices 103 along the outer periphery of the cylindrical battery cell 200, the entire outer periphery of the cylindrical battery cell 200 can be covered, and the number of image capture devices 103 can be reduced, lowering manufacturing costs.

Referring to FIG. 1 and FIG. 2, in some embodiments, the plurality of image capture devices 103 are spaced apart along the central axis direction of the cylindrical battery cell 200.

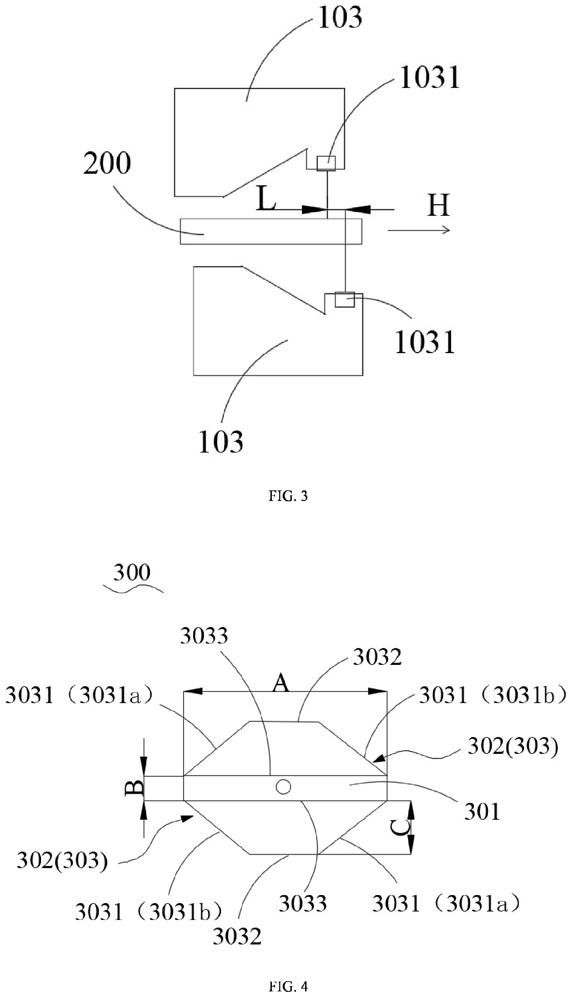

The cylindrical battery cell 200 is cylindrical, and the central axis refers to the central axis of the corresponding cylindrical shape of the cylindrical battery cell 200. Spaced distribution means that the plurality of image capture devices 103 are located at different heights along the central axis of the cylindrical battery cell. In further embodiments, the plurality of image capture devices 103 are staggered in the circumferential direction of the cylindrical battery cell 200. The cylindrical battery cell 200 can be mounted on the stage 102 in various ways, such as vertically or horizontally. Regardless of the mounting method, the plurality of image capture devices 103 are spaced apart along the central axis direction of the cylindrical battery cell 200, that is, along the height direction of the cylindrical surface of the cylindrical battery cell 200. Specifically, referring to FIG. 3, arrow H in FIG. 3 represents the ascending direction of the cylindrical battery cell 200, and the label L represents the offset distance between two adjacent image capture devices 103 in the vertical direction. In one embodiment, the offset distance between two adjacent image capture devices 103 in the vertical direction is 8 mm to 12 mm. Theoretically, a larger offset distance between the image capture devices 103 in the vertical direction means less the laser interference between different image capture devices 103. However, if the distance between the image capture devices 103 is too large, the travel distance of the lifting module 104 to move the cylindrical battery cell 200 will be greater, affecting detection efficiency. Therefore, the offset distance needs to be set within a certain range. Through practice, it has been confirmed that an offset distance of 8 mm or more results in clear images, and an offset distance of 12 mm or less has little impact on detection efficiency. Therefore, in this embodiment, the offset distance between two adjacent image capture devices 103 in the vertical direction is set to 8 mm to 12 mm. Furthermore, setting the offset distance to 10 mm or more results in even clearer images, so the offset distance between two adjacent image capture devices 103 in the vertical direction can also be set to 10 mm to 12 mm.

By spacing the image capture devices 103 along the central axis direction of the cylindrical battery cell 200, mutual interference of lasers emitted by the laser scanners 1031 of the image capture devices 103 can be reduced, ensuring good imaging effects and facilitating subsequent processing of the acquired images. Moreover, this allows for complete coverage of the field of view of the peripheral cylindrical surface of the cylindrical battery cell 200 with the minimum number of image capture devices 103, ensuring detection accuracy while reducing the number of image capture devices 103, thereby lowering the manufacturing cost and computational complexity of the cylindricity detection apparatus 100 for a cylindrical battery cell.

In some embodiments, the plurality of image capture devices 103 are configured to take a photograph of the cylindrical battery cell 200 to acquire image information, so as to acquire a peripheral 3D image 400 of the cylindrical battery cell 200 based on the image information, select a first preset number of detection planes at preset positions on the peripheral 3D image 400, select a second preset number of detection points 404 on each detection plane, and acquire the cylindricity of the cylindrical battery cell 200 based on the difference in radius of the cylindrical surface constructed from the detection points 404 on each detection plane.

Specifically, the plurality of image capture devices 103 are controlled to take a photograph of the cylindrical battery cell 200 to acquire image information of the periphery of the cylindrical battery cell 200. An industrial computer is provided with a plug-in, and the plug-in acquires the image information captured by each image capture device 103 and stitches or processes it to obtain the peripheral 3D image of the cylindrical battery cell 200. The image capture devices 103 have a built-in preset program that selects a first preset number of detection planes on the peripheral 3D image 400, where the detection planes are cross-sections of the 3D image of the cylindrical battery cell 200. Several cross-sections are selected on the 3D image as detection objects; the detection plane intersects with the 3D image of the cylindrical battery cell 200 to form a circle, which is also a circle on the cylindrical battery cell 200. A second preset number of detection points 404 are selected on the circle, and a standard circle is fitted based on the second preset number of detection points 404 on each detection plane to obtain the center of the standard circle. The distances between the center and the detection points 404 on the same detection plane are measured, and the three points with the smallest distances and the three points with the largest distances are selected to form circles. The circle formed by the three points with the smallest distances is the innermost circle, and the circle formed by the three points with the largest distances is the outermost circle. A cylindrical surface is constructed using the innermost circles obtained from the detection planes to obtain the minimum cylindrical surface; and a cylindrical surface is constructed using the outermost circles obtained from all detection planes to obtain the maximum cylindrical surface. The radii of the minimum cylindrical surface and the maximum cylindrical surface are obtained, and the difference between the two radii is used to acquire the cylindricity of the cylindrical battery cell 200.

By taking a photograph of the cylindrical battery cell 200 with plurality of image capture devices 103 to acquire image information, obtaining a peripheral 3D image 400 of the cylindrical battery cell 200 based on the image information, and acquiring the cylindricity of the cylindrical battery cell 200 through a preset program of the image capture devices 103, the cylindricity of the cylindrical battery cell 200 can be directly obtained with high detection precision.

Referring to FIG. 1 and FIG. 2, in some embodiments, the image capture devices 103 include three 3D line-scan cameras mounted on the bracket 101, where the three 3D line-scan cameras are spaced along the outer periphery of the cylindrical battery cell 200, and the three 3D line-scan cameras are spaced apart along the central axis direction of the cylindrical battery cell 200.

The 3D line-scan cameras can perform imaging by emitting lasers. Their working principle involves scanning an object with a laser line and converting the reflected laser signal into a digital signal to obtain the three-dimensional shape of the object. In general, the three 3D line-scan cameras are distributed in a spiral ascending manner along the central axis of the cylindrical battery cell 200. The cylindrical battery cell 200 is cylindrical, and the central axis refers to the central axis of the corresponding cylindrical shape of the cylindrical battery cell 200. Spaced distribution means that the plurality of image capture devices 103 are located at different heights along the central axis of the cylindrical battery cell 200. In further embodiments, the offset distance between two adjacent image capture devices 103 in the vertical direction can be set to 8 mm to 12 mm. The three 3D line-scan cameras are spaced along the outer periphery of the cylindrical battery cell 200. Referring to FIG. 2, a plane perpendicular to the central axis of the cylindrical battery cell 200 is defined as the projection plane, the projection of the central axis of the cylindrical battery cell 200 on the projection plane is the center, and the projections of the three 3D line-scan cameras on the projection plane are uniformly distributed circumferentially around the center. In further embodiments, the three 3D line-scan cameras are uniformly distributed along the outer periphery of the cylindrical battery cell 200, that is, the projections of two adjacent 3D line-scan cameras on the projection plane form an angle of 120 degrees. Of course, the number of 3D line-scan cameras can also be four.

By arranging three 3D line-scan cameras spaced along the outer periphery of the cylindrical battery cell 200, images of the entire side surface in all directions of the cylindrical battery cell can be acquired, ensuring detection accuracy while reducing the number of image capture devices 103, thereby lowering the manufacturing cost and computational complexity of the cylindricity detection apparatus 100 for a cylindrical battery cell. By spacing the image capture devices 103 along the central axis direction of the cylindrical battery cell 200, mutual interference of lasers emitted by the laser scanners 1031 of the image capture devices 103 can be reduced, ensuring clear images of the entire height direction of the side surface of the cylindrical battery cell 200, facilitating subsequent processing of the acquired images.

In some embodiments, the bracket 101 includes a mounting column 1011 and three upright columns 1012, the stage 102 is mounted on the mounting column 1011, the three upright columns 1012 are arranged around the outer periphery of the stage 102, and the three 3D line-scan cameras are mounted on the three upright columns 1012 in a one-to-one correspondence.

Specifically, the mounting column 1011 and the three upright columns 1012 are all arranged vertically and can be placed on a surface during use. A connecting plate 1013 may also be provided, where the connecting plate 1013 is connected to the tops of the three upright columns 1012, integrating the three upright columns 1012. The three 3D line-scan cameras are mounted on the three upright columns 1012 in a one-to-one correspondence, meaning that each upright column 1012 has one 3D line-scan camera mounted thereon. Since the cylindrical battery cell 200 is placed on the stage 102, arranging the three upright columns 1012 around the outer periphery of the stage 102 allows the 3D line-scan cameras mounted on the upright columns 1012 to be spaced around the outer periphery of the cylindrical battery cell 200, enabling acquisition of images of the entire side surface of the cylindrical battery cell 200. Additionally, the 3D line-scan cameras Angstroms may be slidably mounted on the upright columns 1012, allowing adjustment of the position of the 3D line-scan cameras on the upright columns 1012 to accommodate the measurement of cylindrical battery cells 200 of different heights.

By providing a mounting column 1011 to serve as the mounting position for the stage 102 and arranging three upright columns 1012 around the outer periphery of the stage 102, each upright column 1012 having one 3D line-scan camera mounted thereon, the three 3D line-scan cameras are spaced around the outer periphery of the cylindrical battery cell 200 during detection, enabling acquisition of images of the entire side surface of the cylindrical battery cell 200 and reducing the likelihood of blind spots that cannot be captured. Referring to FIG. 1, according to some embodiments of this application, the bracket 101 is provided with a lifting module 104, the lifting module 104 is connected to the bracket 101, and the stage 102 is rotatably mounted on the lifting module 104 and can move up and down with the lifting module 104.

The lifting module 104 can move vertically on the bracket 101, thereby driving the stage 102 mounted on the lifting module 104 to move up and down, transporting the cylindrical battery cell 200 to the scanning position of the image capture devices 103. During the movement of the lifting module 104, an encoder integrated therein sends a photographing signal to the plurality of image capture devices 103 to perform simultaneous image scanning. The stage 102 may be provided with multiple mounting positions, each of which can hold a cylindrical battery cell 200. When a specific cylindrical battery cell 200 needs to be detected, the stage 102 is rotated to position the cylindrical battery cell 200 to be detected at the detection station, and then it follows the lifting module 104 for vertical movement to allow scanning by the image capture devices 103. After scanning is completed, the cylindrical battery cell 200 returns to the detection station under the movement of the lifting module 104 and is then removed. Alternatively, the stage 102 may be capable of vertical movement on the lifting module 104 to transport the cylindrical battery cell 200 to the scanning area of the image capture devices 103. Specifically, the lifting module 104 may be mounted on the mounting column 1011.

By rotatably mounting the stage 102 on the lifting module 104, the cylindrical battery cell 200 can be rotated to the detection station by rotating the stage 102, and then the lifting module 104 can be controlled to ascend. In the ascending process of the lifting module 104, an encoder sends a photographing signal to the plurality of image capture devices 103 to perform simultaneous image scanning, facilitating image acquisition of the cylindrical battery cell 200.

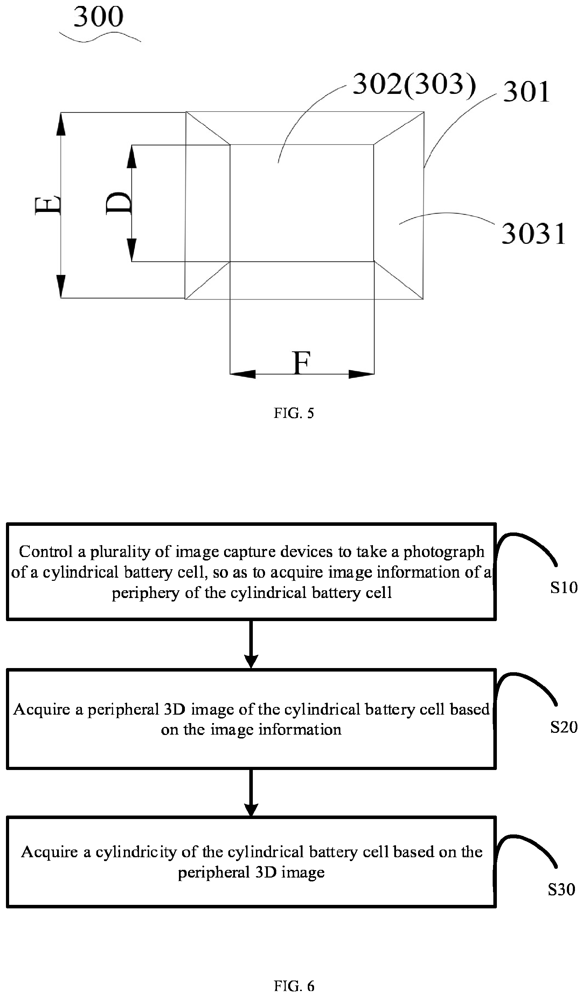

Referring to FIG. 4 and FIG. 5, in some embodiments, the cylindricity detection apparatus 100 for a cylindrical battery cell further includes a calibration block 300, where the calibration block 300 is configured to calibrate an image capture system composed of the plurality of image capture devices 103, and the calibration block 300 includes a base plate 301 and two polyhedral prisms 302, where the bottom surfaces 3033 of the two polyhedral prisms 302 are connected to opposite sides of the base plate 301, respectively.

The polyhedral prism 302 includes a top surface 3032, a bottom surface 3033 opposite to the top surface 3032, and a plurality of inclined side surfaces 3031 disposed between the top surface 3032 and the bottom surface 3033. The top surface 3032 and the bottom surface 3033 of the polyhedral prism 302 are parallel to each other. After the bottom surfaces 3033 of two identical polyhedral prisms 302 are connected to opposite sides of the base plate 301, the inclined side surfaces 3031 of the two polyhedral prisms 302 are arranged pairwise parallel to each other. As shown in FIG. 4, the inclined side surfaces 3031 include at least a first side surface 3031a and a second side surface 3031b, where the two first side surfaces 3031a of the two polyhedral prisms 302 are parallel to each other, and the two second side surfaces 3031b of the two polyhedral prisms 302 are parallel to each other. The calibration block 300 is configured to calibrate the system composed of the plurality of image capture devices 103. Specifically, referring to FIG. 4 and FIG. 5, the X, Y, and Z coordinates of the image capture devices 103 are calibrated using the length D and width F of the top surface 3032 of the polyhedral prism 302, the height C of the polyhedral prism 302, the height B of the base plate 301, the length E of the base plate 301, and the width A of the base plate 301. The torsion angle of the coordinate system of the image capture system composed of the plurality of image capture devices 301 is calibrated using the distances between the mutually parallel inclined side surfaces 3031 of the polyhedral prism 302 of the calibration block 300. Additionally, blind holes may be provided on the base plate 301 to fix the calibration block 300 during calibration.

By calibrating the coordinate systems of the plurality of image capture devices 103 using the polyhedral prisms 302 and stitching the coordinate systems of the plurality of image capture devices 103 together, calibration of the image capture system composed of the plurality of image capture devices 103 is achieved, improving the accuracy of image stitching and detection precision.

Referring to FIG. 4 and FIG. 5, in some embodiments, the polyhedral prism 302 is a trapezoidal prism 303, the bottom surface 3033 of the trapezoidal prism 303 is connected to the base plate 301, the trapezoidal prism 303 includes four inclined side surfaces 3031. The inclined side surfaces 3031 of one trapezoidal prism 303 are arranged in a one-to-one correspondence and parallel to the inclined side surfaces 3031 of the other trapezoidal prism 303. Specifically, the trapezoidal prism 303 may be an isosceles trapezoidal prism, such that the bottom surface 3033 of the trapezoidal prism 303 is connected to the base plate 301, and the four inclined side surfaces 3031 of the trapezoidal prism 303 are arranged pairwise parallel, enabling calibration of the torsion angle of the coordinate system of the image capture system composed of the plurality of image capture devices 301 using the eight pairwise parallel inclined side surfaces 3031, thereby improving detection precision.

By adopting trapezoidal prisms 303, manufacturing is convenient, and the coordinate system's torsion angle can be calibrated using eight pairwise parallel inclined side surfaces 3031, improving calibration accuracy, and consequently, improving the subsequent detection precision of the image capture devices 103.

According to some embodiments of this application, this application provides a cylindricity detection apparatus 100 for a cylindrical battery cell, which includes a bracket 101, a lifting module 104, and a stage 102. The lifting module 104 is connected to the bracket 101, the stage 102 is rotatably mounted on the lifting module 104 and can move up and down with the lifting module 104, and the stage 102 is configured to hold the cylindrical battery cell 200. The bracket 101 is provided with three image capture devices 103, where the image capture devices 103 are provided staggered in a central axis direction of the cylindrical battery cell. The three image capture devices 103 are configured to take a photograph to acquire image information of a cylindrical surface of the cylindrical battery cell 200. Specifically, the three image capture devices 103 take a photograph of the cylindrical battery cell 200 from various angles of the side surface of the cylindrical battery cell 200, so as to acquire photos of the cylindrical battery cell 200 from various angles. A plug-in composites and stitches the photos to obtain the peripheral 3D image 400 of the cylindrical battery cell 200. Then, multiple detection planes are selected on the peripheral 3D image 400 of the cylindrical battery cell 200, and multiple detection points are selected on each detection plane. A minimum cylindrical surface and a maximum cylindrical surface are constructed based on all the detection points selected on all the detection planes, where the minimum cylindrical surface refers to a cylindrical surface with a smallest radius, and the maximum cylindrical surface refers to a cylindrical surface with a largest radius. A difference between the radius of the maximum cylindrical surface and the radius of the minimum cylindrical surface is the cylindricity of the cylindrical battery cell 200. Projections of the three image capture devices 103 on the horizontal plane are uniformly spaced, enabling complete coverage of the field of view of the peripheral surface of the cylindrical battery cell 200 with the minimum number of image capture devices 103. This can ensure detection accuracy while reducing the number of image capture devices 103, thereby lowering the manufacturing cost and computational complexity of the cylindricity detection apparatus 100 for a cylindrical battery cell.

According to a second aspect, referring to FIG. 6, FIG. 6 is a schematic flowchart of a detection method according to a first embodiment of this application. According to some embodiments of this application, this application provides a detection method. The detection method is applied to the aforementioned cylindricity detection apparatus 100 for a cylindrical battery cell, and used for detecting a cylindricity of a cylindrical battery cell 200. The cylindricity detection apparatus 100 for a cylindrical battery cell includes a bracket 101, a lifting module 104, and a stage 102. The lifting module 104 is connected to the bracket 101, the stage 102 is rotatably mounted on the lifting module 104 and can move up and down with the lifting module 104, and the stage 102 is configured to hold the cylindrical battery cell 200. The bracket 101 is provided with three image capture devices 103, where the image capture devices 103 are disposed staggered in a vertical direction. The three image capture devices 103 are configured to take a photograph to acquire image information of the cylindrical surface of the cylindrical battery cell 200, including the following steps:
S10. Control the plurality of image capture devices 103 to take a photograph of the cylindrical battery cell 200, so as to acquire image information of a periphery of the cylindrical battery cell 200.

First, the cylindrical battery cell 200 is placed on the stage 102, and under the driving action of the lifting module 104, the cylindrical battery cell 200 ascends. The plurality of image capture devices 103 arranged around the periphery of the cylindrical battery cell 200 simultaneously acquire the image information of the side surface of the cylindrical battery cell 200 from various directions of the side surface of the cylindrical battery cell 200.

S20. Acquire a peripheral 3D image 400 of the cylindrical battery cell 200 based on the image information.

An industrial computer is provided with a plug-in, and the plug-in acquires the image information captured by each image capture device 103 and stitches or processes it to obtain the peripheral 3D image of the cylindrical battery cell 200.

S30. Acquire the cylindricity of the cylindrical battery cell 200 based on the peripheral 3D image 400.

The cylindricity of the cylindrical battery cell 200 can be obtained based on the peripheral 3D image and a preset program built into the image capture devices 103.

By using the plurality of image capture devices 103 to simultaneously acquire the image information of the side surface of the cylindrical battery cell 200 and processing the acquired image information through the plug-in in the industrial computer to obtain the cylindricity of the cylindrical battery cell 200, this fills the gap in the related art where cylindricity of cylindrical battery cells 200 cannot be measured, requires low installation precision for the stage 102 and the cylindrical battery cell 200, and offers high detection efficiency.

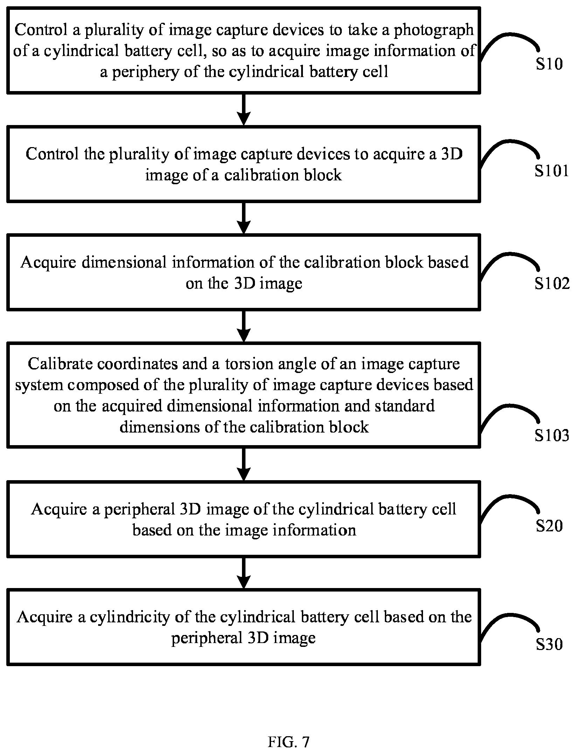

Referring to FIG. 7, FIG. 7 is a schematic flowchart of a detection method according to a second embodiment of this application. After step S10 and before step S30, the method further includes steps:
S101. Control the plurality of image capture devices to acquire a 3D image of a calibration block.

The plurality of image capture devices 103 take a photograph of the cylindrical battery cell 200 to acquire the image information of the periphery of the cylindrical battery cell 200. The industrial computer is provided with the plug-in, and the plug-in acquires the image information captured by each image capture device 103 and stitches or processes it to obtain the peripheral 3D image of the cylindrical battery cell 200.

S102. Acquire dimensional information of the calibration block based on the 3D image.

Dimensional information of the calibration block in various directions can be measured and obtained based on the acquired 3D image. Specifically, the calibration block includes a base plate and two polyhedral prisms, where the polyhedral prism 302 is a trapezoidal prism 303, the bottom surface 3033 of the trapezoidal prism 303 is connected to the base plate 301, and the trapezoidal prism 303 includes four inclined side surfaces 3031. The inclined side surfaces 3031 of one trapezoidal prism 303 are arranged in a one-to-one correspondence and parallel to the inclined side surfaces 3031 of the other trapezoidal prism 303. The polyhedral prism 302 includes a top surface 3032, a bottom surface 3033 opposite to the top surface 3032, and a plurality of inclined side surfaces 3031 disposed between the top surface 3032 and the bottom surface 3033. Referring to FIG. 4 and FIG. 5, the dimensional information includes the length D and width F of the top surface 3032 of the polyhedral prism 302, the height C of the polyhedral prism 302, the height B of the base plate 301, the length E of the base plate 301, and the width A of the base plate 301.

S103. Calibrate coordinates and a torsion angle of an image capture system composed of the plurality of image capture devices based on the acquired dimensional information and standard dimensions of the calibration block. The standard dimensions refer to the dimensional information of the calibration block measured under other calibrated image capture devices, that is, the actual dimensions of the calibration block. By comparing the measured dimensional information with the standard dimensions of the calibration block, the X, Y, and Z coordinates and the torsion angle of the coordinate system of the image capture devices can be calibrated.

In the above embodiments of this invention, by calibrating the coordinate systems of the plurality of image capture devices 103 using the calibration block 303 and stitching the coordinate systems of the plurality of image capture devices 103 together, calibration of the coordinate system of the image capture system composed of the plurality of image capture devices 103 is achieved, improving the accuracy of image stitching and detection precision.

It should be noted that the calibration step using the calibration block 300 may be performed only when necessary, such as when the instrument is first used or when the image capture devices 103 are replaced, and is not required for every detection.

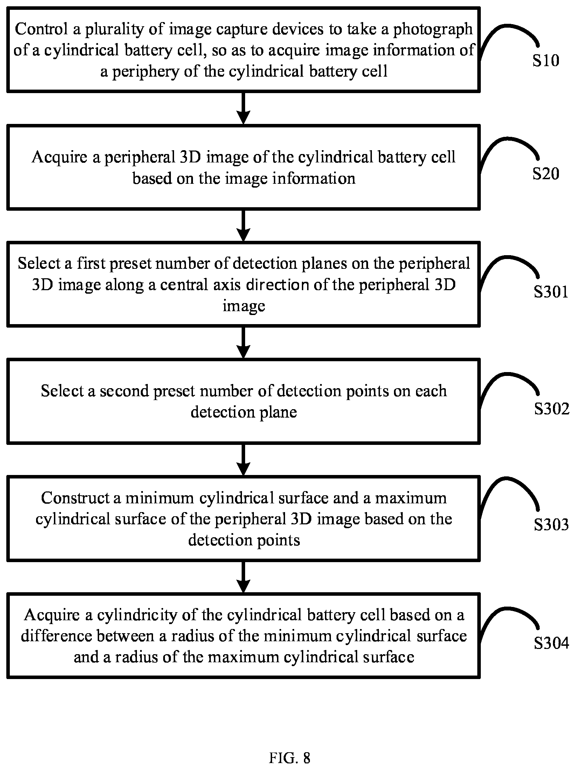

Referring to FIG. 8, FIG. 8 is a schematic flowchart of a detection method according to a third embodiment of this application. Step S30 includes:

S301. Select a first preset number of detection planes on the peripheral 3D image 400 along a central axis direction of the peripheral 3D image 400.

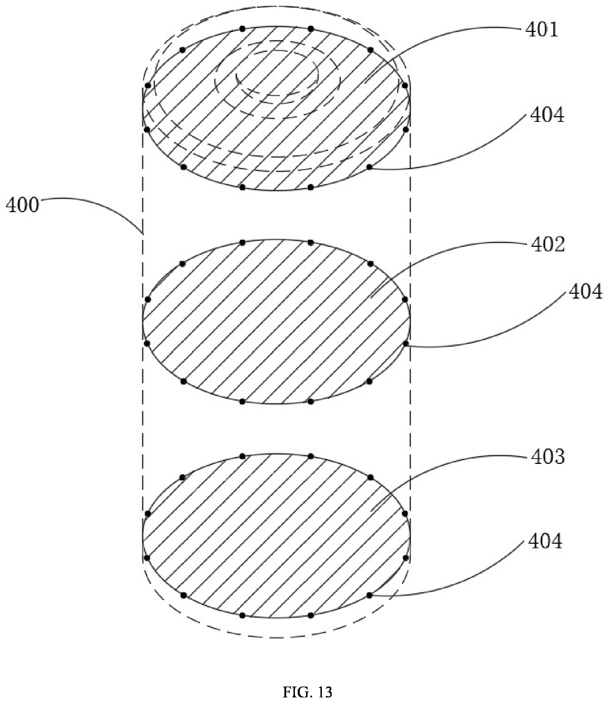

Referring to FIG. 13, FIG. 13 is a schematic diagram of a composited peripheral 3D image of a cylindricity detection apparatus of a cylindrical battery cell and detection planes and detection points selected on the peripheral 3D image according to some embodiments of this application. In FIG. 13, the peripheral dashed line represents the composited peripheral 3D image 400 of the cylindrical battery cell 200, the circles filled with diagonal lines represent the selected detection planes, and the solid points on each detection plane represent the detection points 404 selected on each detection plane. Here, the detection planes are cross-sections of the peripheral 3D image 400 of the cylindrical battery cell 200. Several cross-sections are selected on the 3D image as detection objects, and the first preset number can be set based on actual needs.

S302. Select a second preset number of detection points 404 on each detection plane.

Specifically, the detection plane intersects with the 3D image of the cylindrical battery cell 200 to form a circle, which is also a circle on the cylindrical battery cell 200. A second preset number of detection points 404 are selected on the circle, and the second preset number can be set based on actual needs.

S303. Construct a minimum cylindrical surface and a maximum cylindrical surface of the cylindrical battery cell 200 based on the detection points 404.

Specifically, a standard circle is fitted based on the second preset number of detection points 404 selected on each detection plane to obtain the center of the standard circle. The distances between the center and the detection points 404 on the same detection plane are measured, and the three points with the smallest distances and the three points with the largest distances are selected to form circles. The circle formed by the three points with the smallest distances is the innermost circle, and the circle formed by the three points with the largest distances is the outermost circle. A cylindrical surface is constructed using the innermost circles obtained from the detection planes to obtain the minimum cylindrical surface; and a cylindrical surface is constructed using the outermost circles obtained from all detection planes to obtain the maximum cylindrical surface;
S304. Acquire the cylindricity of the cylindrical battery cell 200 based on a difference between a radius of the minimum cylindrical surface and a radius of the maximum cylindrical surface.

The radii of the minimum cylindrical surface and the maximum cylindrical surface are obtained, and the difference obtained through subtraction of the two radii is used to acquire the cylindricity of the cylindrical battery cell 200.

By selecting the first preset number of detection planes on the peripheral 3D image 400, selecting the second preset number of detection points 404 on each detection plane, constructing the minimum cylindrical surface and the maximum cylindrical surface of the cylindrical battery cell 200 based on the detection points 404, and acquiring the cylindricity of the cylindrical battery cell 200 based on the difference between the radius of the minimum cylindrical surface and the radius of the maximum cylindrical surface, the cylindricity of the cylindrical battery cell 200 can be conveniently obtained with high detection precision.

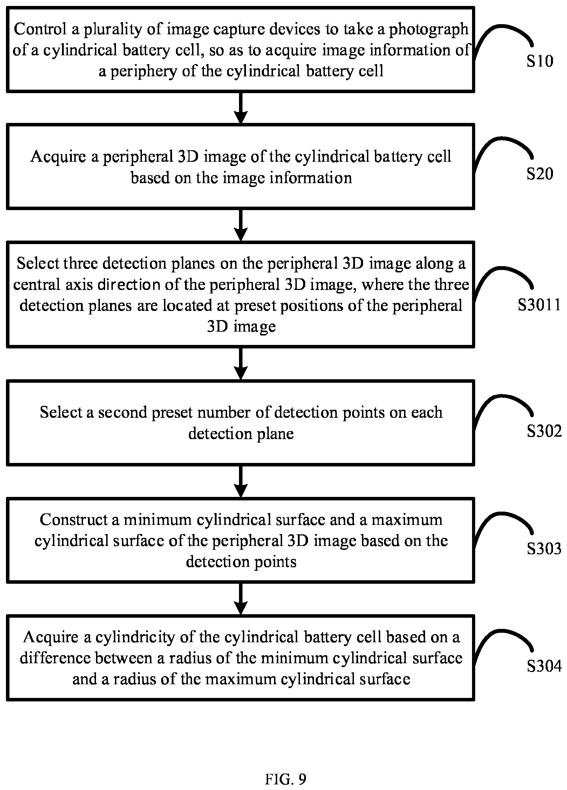

Referring to FIG. 9, FIG. 9 is a schematic flowchart of a detection method according to a fourth embodiment of this application. Step S301 includes:
S3011. Select three detection planes on the peripheral 3D image 400 along the central axis direction of the peripheral 3D image 400, where the three detection planes are located at preset positions of the peripheral 3D image 400.

The preset positions here may be predetermined positions of the peripheral 3D image 400. If key detection positions of the cylindrical battery cell need to be detected, corresponding positions can be selected as the preset positions.

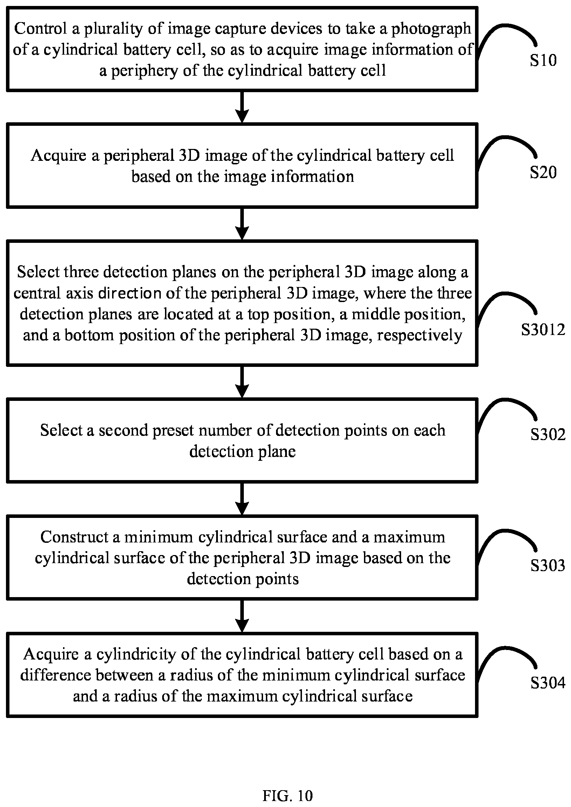

Referring to FIG. 10 and FIG. 13, FIG. 10 is a schematic flowchart of a detection method according to a fifth embodiment of this application. Specifically, step S301 includes S3012:
selecting three detection planes on the peripheral 3D image 400 along the central axis direction of the peripheral 3D image 400, where the three detection planes are located at preset positions of the peripheral 3D image 400.

Specifically, the three detection planes include a first detection plane 401, a second detection plane 402, and a third detection plane 403. The first detection plane 401 is located at a top position of the peripheral 3D image 400, the second detection plane 402 is located at a middle position of the peripheral 3D image 400, and the third detection plane 403 is located at a bottom position of the peripheral 3D image 400.

The 3D image of the cylindrical battery cell 200 is a cylindrical surface, and three detection planes are sequentially selected along the height direction of the cylindrical surface, namely the first detection plane 401, the second detection plane 402, and the third detection plane 403. The selected first detection plane 401 is located at the top position of the peripheral 3D image 400, the second detection plane 402 is located at the middle position of the peripheral 3D image 400, and the third detection plane 403 is located at the bottom position of the peripheral 3D image 400, enabling the selected detection planes to cover the cylindrical surface as much as possible. Of course, to improve detection precision, a greater number of detection planes may be selected, and those skilled in the art can set this based on actual needs.

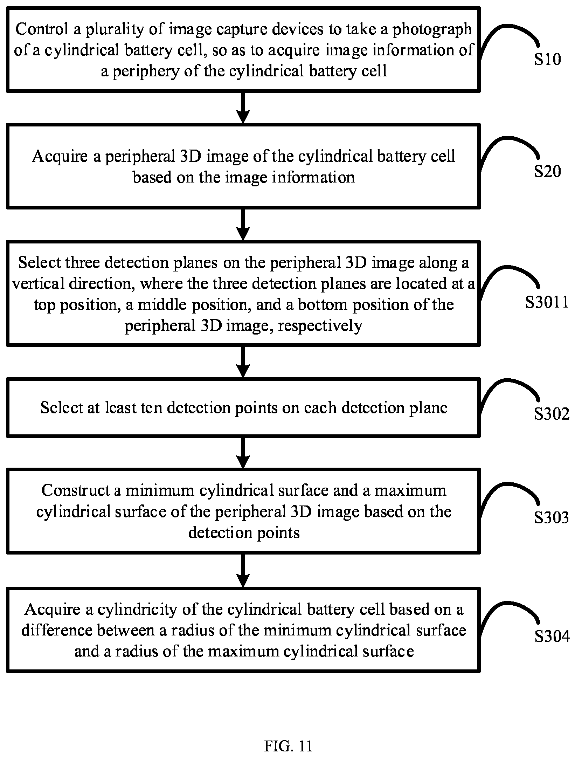

Referencing FIG. 11, FIG. 11 is a schematic flowchart of a detection method according to a sixth embodiment of this application. Step S302 includes:
S3021. Select at least ten detection points 404 on each detection plane.

The number of detection points 404 cannot be too small. In a case of an excessively smaller number, concave or convex positions of the cylindrical surface may not be selected, reducing detection precision. Theoretically, more detection points 404 selected is preferred, as a larger number of detection points 404 results in higher measurement accuracy. Therefore, the number of selected detection points 404 should not be less than ten.

By selecting the at least ten detection points on each detection plane, the surface condition of the cylindrical surface can be more comprehensively reflected, improving detection precision.

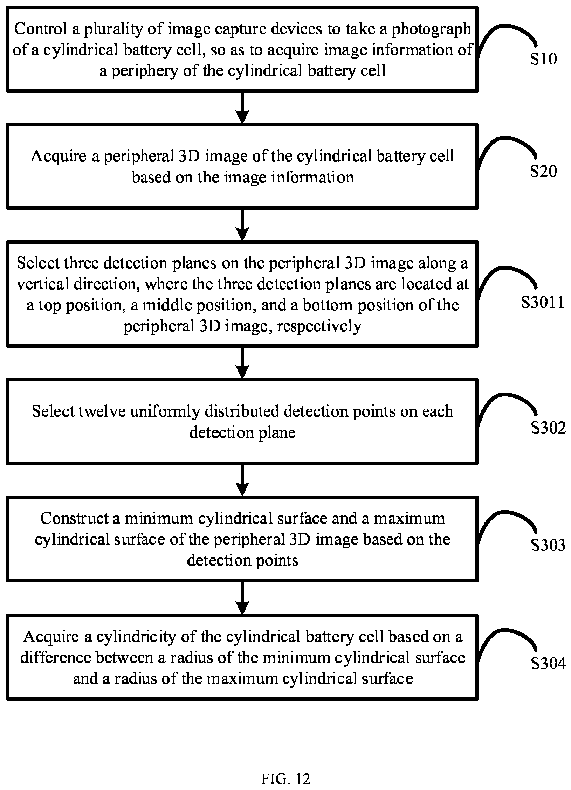

Referring to FIG. 12, FIG. 12 is a schematic flowchart of a detection method according to a seventh embodiment of this application. Step S302 includes:
S3022. Select twelve uniformly distributed detection points 404 on each detection plane.

Although theoretically, more detection points 404 selected is preferred as a larger number of detection points 404 results in higher measurement accuracy, a larger number of points increases the computational load, which affects detection efficiency. Through experimentation, when the number of selected detection points 404 is twelve, both high detection precision and high detection efficiency can be ensured.

According to some embodiments of this application, first, the cylindrical battery cell 200 is placed on the stage 102, and under the action of the lifting module 104, the cylindrical battery cell 200 ascends. The plurality of image capture devices 103 arranged around the periphery of the cylindrical battery cell 200 acquire the image information of the side surface of the cylindrical battery cell 200 from various directions of the side surface of the cylindrical battery cell 200. The industrial computer is provided with the plug-in, and the plug-in acquires the image information captured by each image capture device 103 and stitches or processes it to obtain the peripheral 3D image of the cylindrical battery cell 200. The calibration block 300 is used to calibrate the plurality of image capture devices 103. The first detection plane 401, the second detection plane 402, and the third detection plane 403 spaced apart are selected on the peripheral 3D image 400 along the central axis direction of the peripheral 3D image 400. The first detection plane 401 is located at the top position of the peripheral 3D image 400, the second detection plane 402 is located at the middle position of the peripheral 3D image 400, and the third detection plane 403 is located at the bottom position of the peripheral 3D image 400. Twelve uniformly distributed detection points 404 are selected on each detection plane. The minimum cylindrical surface and the maximum cylindrical surface of the cylindrical battery cell 200 are constructed based on the detection points 404. The cylindricity of the cylindrical battery cell 200 is acquired based on the difference between the radius of the minimum cylindrical surface and the radius of the maximum cylindrical surface. By using the plurality of image capture devices 103 to simultaneously acquire the image information of the side surface of the cylindrical battery cell 200 and processing the acquired image information through the plug-in in the industrial computer to obtain the cylindricity of the cylindrical battery cell 200, this fills the gap in the related art where cylindricity of cylindrical battery cells 200 cannot be measured, requires low installation precision for stage 102 and the cylindrical battery cell 200, and offers high detection efficiency.

Finally, it should be noted that the above embodiments are only used to illustrate the technical solutions of this application and are not intended to limit them. Although this application has been described in detail with reference to the foregoing embodiments, those skilled in the art should understand that they can still modify the technical solutions described in the foregoing embodiments or equivalently replace some or all of the technical features therein. Such modifications or replacements do not cause the essence of the corresponding technical solutions to depart from the scope of the technical solutions of the embodiments of this application and should be included within the scope of the claims and description of this application. In particular, as long as there is no structural conflict, the various technical features mentioned in the embodiments can be combined in any manner. This application is not limited to the specific embodiments disclosed herein but includes all technical solutions falling within the scope of the claims.

## Claims

1. A cylindricity detection apparatus for a cylindrical battery cell, comprising:
a bracket;
a stage, wherein the stage is mounted on the bracket, and the stage is configured to hold a cylindrical battery cell; and
a plurality of image capture devices, wherein the plurality of image capture devices are mounted on the bracket; and the plurality of image capture devices are configured to acquire image information of the cylindrical battery cell, so as to construct a cylindrical surface based on the image information, and acquire a cylindricity of the cylindrical battery cell based on the constructed cylindrical surface.

2. The cylindricity detection apparatus for a cylindrical battery cell according to claim 1, wherein the plurality of image capture devices are uniformly distributed along an outer periphery of the cylindrical battery cell.

3. The cylindricity detection apparatus for a cylindrical battery cell according to claim 1, wherein the plurality of image capture devices are spaced apart along a central axis direction of the cylindrical battery cell.

4. The cylindricity detection apparatus for a cylindrical battery cell according to claim 1, wherein the plurality of image capture devices are configured to take a photograph of the cylindrical battery cell to acquire image information, so as to acquire a peripheral 3D image of the cylindrical battery cell based on the image information, select a first preset number of detection planes at preset positions on the peripheral 3D image, select a second preset number of detection points on each detection plane, construct a cylindrical surface based on the detection points on each detection plane, and acquire the cylindricity of the cylindrical battery cell based on a difference in radiuses of the constructed cylindrical surfaces.

5. The cylindricity detection apparatus for a cylindrical battery cell according to claim 1, wherein the plurality of image capture devices comprise three 3D line-scan cameras mounted on the bracket, the three 3D line-scan cameras are uniformly distributed along an outer periphery of the cylindrical battery cell, and the three 3D line-scan cameras are spaced apart along a central axis direction of the cylindrical battery cell.

6. The cylindricity detection apparatus for a cylindrical battery cell according to claim 5, wherein the bracket comprises a mounting column and three upright columns, the stage is mounted on the mounting column, the three upright columns are arranged around an outer periphery of the stage, and the three 3D line-scan cameras are mounted on the three upright columns in a one-to-one correspondence.

7. The cylindricity detection apparatus for a cylindrical battery cell according to any one of claims 1 to 6, wherein the cylindricity detection apparatus for a cylindrical battery cell further comprises a calibration block, wherein the calibration block is configured to calibrate an image capture system composed of the plurality of image capture devices, and the calibration block comprises a base plate and two polyhedral prisms, wherein bottom surfaces of the two polyhedral prisms are connected to two opposite sides of the base plate, respectively.

8. The cylindricity detection apparatus for a cylindrical battery cell according to claim 7, wherein the polyhedral prism is a trapezoidal prism, a bottom surface of the trapezoidal prism is connected to the base plate, the trapezoidal prism comprises four inclined side surfaces, and the inclined side surfaces of one trapezoidal prism are arranged in a one-to-one correspondence and parallel to the inclined side surface of the other trapezoidal prism.

9. The cylindricity detection apparatus for a cylindrical battery cell according to any one of claims 1 to 6, wherein the bracket is provided with a lifting module, the lifting module is connected to the bracket, and the stage is rotatably mounted on the lifting module and capable of moving up and down with the lifting module.

10. A detection method for detecting a cylindricity of a cylindrical battery cell, comprising the following steps:
controlling a plurality of image capture devices to take a photograph of a cylindrical battery cell to acquire image information of a periphery of the cylindrical battery cell;
acquiring a peripheral 3D image of the cylindrical battery cell based on the image information; and
acquiring a cylindricity of the cylindrical battery cell based on the peripheral 3D image.

11. The detection method according to claim 10, before the step of controlling a plurality of image capture devices to take a photograph of a cylindrical battery cell to acquire image information of a periphery of the cylindrical battery cell, further comprising:
controlling the plurality of image capture devices to acquire a 3D image of a calibration block;
acquiring dimensional information of the calibration block based on the 3D image; and
calibrating coordinates and a torsion angle of an image capture system composed of the plurality of image capture devices based on the acquired dimensional information and standard dimensions of the calibration block.

12. The detection method according to claim 10 or 11, wherein the step of acquiring a cylindricity of the cylindrical battery cell based on the peripheral 3D image comprises:
selecting a first preset number of detection planes on the peripheral 3D image along a central axis direction of the peripheral 3D image;
selecting a second preset number of detection points on each detection plane;
constructing a minimum cylindrical surface and a maximum cylindrical surface of the peripheral 3D image based on the detection points; and
acquiring the cylindricity of the cylindrical battery cell based on a difference between a radius of the minimum cylindrical surface and a radius of the maximum cylindrical surface.

13. The detection method according to claim 12, wherein the step of selecting a first preset number of detection planes on the peripheral 3D image along a central axis direction of the peripheral 3D image comprises:
selecting three detection planes on the peripheral 3D image along the central axis direction of the peripheral 3D image, wherein the three detection planes are located at preset positions of the peripheral 3D image, respectively.

14. The detection method according to claim 13, wherein the three detection planes are located at a top position, a middle position, and a bottom position of the peripheral 3D image, respectively.

15. The detection method according to claim 14, wherein the step of selecting a second preset number of detection points on each detection plane comprises:
selecting at least ten detection points on each detection plane.

16. The detection method according to claim 15, wherein the step of selecting a second preset number of detection points on each detection plane comprises:
selecting twelve uniformly distributed detection points on each detection plane.
